# EUROPEAN PATENT APPLICATION

(11) **EP 2 908 032 A1**
(43) Date of publication of application: **19.08.2015**
(21) Application number: 13840579.0
(22) Date of filing: 09.09.2013
(51) Int. Cl.: F16H 61/12, F16D 48/02

(54) **AUTOMATIC TRANSMISSION EQUIPPED WITH FRICTION ELEMENT HAVING LOCKING MECHANISM ATTACHED THERETO, AND CONTROL METHOD THEREFOR**

(30) Priority: 26.09.2012 JP 2012212177
(71) Applicant: Jatco Ltd, Fuji-shi, Shizuoka 417-8585 (JP)
(72) Inventor: NAKANO, Yusuke, Fuji-shi Shizuoka 417-8585 (JP); KOBAYASHI, Katsuya, Fuji-shi Shizuoka 417-8585 (JP); MATSUMOTO, Kouzi, Fuji-shi Shizuoka 417-8585 (JP); IKEDA, Tomomasa, Fuji-shi Shizuoka 417-8585 (JP)
(74) Representative: Hoefer & Partner Patentanwälte mbB
(86) International application number: PCT/JP2013/074233
(87) International publication number: WO 2014/050522

(57) **Abstract**

A transmission controller performs engagement processing, where a forward clutch is engaged and a lock mechanism is brought into a locked state by supplying an ON-pressure to an ON-pressure piston chamber and where the hydraulic pressure of the ON-pressure piston chamber is lowered, and supplies the ON-pressure to the ON-pressure piston chamber when the forward clutch slips even though the forward clutch has been engaged in the engagement processing, while a vehicle is traveling.

## Description

### TECHNICAL FIELD

The present invention relates to control of an automatic transmission equipped with a friction element having a lock mechanism attached thereto.

### BACKGROUND ART

A friction element operated with a hydraulic pressure is used as a clutch and a brake of an automatic transmission so as to join two coaxial members to each other (in the case of the clutch, the two coaxial members are both rotational elements, whereas in the case of the brake, one of the two coaxial members is a rotational element and the other is a non-rotational element) (JP 7-12221A).

In such a friction element, for example, the two members each have a plurality of friction plates attached thereto such that the friction plates are slidable in an axial direction, and the friction plates of the two members alternate. When the friction plates of the two members are pressed against one another by a hydraulic piston, the two members are joined to each other via the friction plates.

### SUMMARY OF INVENTION

In order to maintain an engaged state of the aforementioned friction element, it is necessary to keep supplying a hydraulic pressure to the hydraulic piston by driving a hydraulic pump with an engine. This undesirably degrades the fuel economy of a vehicle equipped with an automatic transmission.

Accordingly, there is considered a configuration as follows: the hydraulic pressure is supplied until the friction element is engaged; after the friction element is engaged, the motion of the hydraulic piston is regulated by a lock mechanism; even if the hydraulic pressure is lowered, the friction element can maintain an engaged state. According to the configuration, the load of the hydraulic pump can be reduced and the fuel efficiency of a vehicle can be improved.

However, the friction element may slip when the lock mechanism does not work well or when the friction element is worn even if the lock mechanism works normally. When the friction element slips, a transmission cannot fully transmit a driving force, decreasing the power performance of a vehicle. Thus, slip needs to be suppressed when the friction element slips.

An object of the present invention is to suppress the slip of friction element when the friction element with a lock mechanism slips, in an automatic transmission provided with the friction element with the lock mechanism.

According to a certain aspect of the present invention, there is provided an automatic transmission. The automatic transmission comprises: friction element which is arranged in a power transmission path and in which a lock mechanism is brought into a locked state when an ON-pressure is supplied to an engagement-side oil chamber and in which an engaged state is maintained even if the hydraulic pressure of the engagement-side oil chamber is lowered when the lock mechanism has been brought into the locked state; and a control device, which performs engagement processing where the friction element is engaged and the lock mechanism is brought into a locked state by supplying the ON-pressure to the engagement-side oil chamber and where the hydraulic pressure of the engagement-side oil chamber is lowered, and which supplies the ON-pressure to the engagement-side oil chamber when the friction element slips even though the friction element has been engaged in the engagement processing, while a vehicle is traveling. Moreover, there is provided a method for correspondingly controlling this automatic transmission.

According to the above aspect, since the ON-pressure is supplied to the engagement-side oil chamber when the friction element slips even though the friction element has been engaged in the engagement processing, the slip of the friction element is suppressed. Thereby, there can be suppressed the reduction of the power performance of a vehicle, which is caused by the slip of the friction element.

### BRIEF DESCRIPTION OF DRAWINGS

FIG. 1 is a schematic block diagram of a vehicle provided with an automatic transmission according to an embodiment of the present invention;
FIG. 2 is a cross sectional view of a forward clutch and a clutch operation pack that operates the forward clutch;
FIG. 3 is a flow chart showing the substance of slip detection/suppression processing which a transmission controller performs;
FIG. 4 is a flow chart showing the substance of verification processing which the transmission controller performs.

### DESCRIPTION OF EMBODIMENTS

The following describes an embodiment of the present invention with reference to the attached drawings.

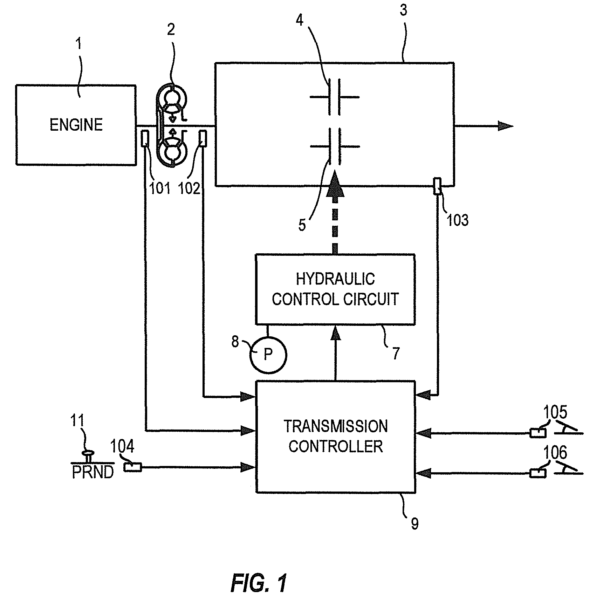

Fig. 1 shows a schematic configuration of a vehicle equipped with an automatic transmission according to the embodiment of the present invention. The vehicle includes an engine 1, a torque converter 2, and a transmission 3. An output rotation of the engine 1 is transmitted to unillustrated drive wheels via the torque converter 2, the transmission 3, and an unillustrated differential gear unit.

The transmission 3 is a step or continuously variable automatic transmission. The transmission 3 includes a reverse brake 4 and a forward clutch 5. In a state where the reverse brake 4 is engaged, the transmission 3 outputs the rotation of the engine 1 in reverse. In a state where the forward clutch 5 is engaged, the transmission 3 outputs the rotation of the engine 1 while maintaining its rotational direction.

The reverse brake 4 is a traditional friction element which is engaged through a supply of an engagement pressure, and which requires a continuous supply of the engagement pressure to maintain the engaged state thereof. The reverse brake 4 can be released by stopping the supply of the engagement pressure.

As will be described later, the forward clutch 5 is a friction element having a lock mechanism BL attached thereto. Once the lock mechanism BL has been placed in a locked state through a supply of an ON pressure to the forward clutch 5, the forward clutch 5 can be maintained in the engaged state even if the supply of the ON pressure is stopped. The forward clutch 5 can be released by placing the lock mechanism BL in a deactivated state through a supply of an OFF pressure to the forward clutch 5. Once the lock mechanism BL has been placed in the deactivated state, the forward clutch 5 can be maintained in the released state even if the supply of the OFF pressure is stopped. The configuration of the forward clutch 5 will be described later in detail.

If engagement is simultaneously performed both in the reverse brake 4 and the forward clutch 5, the rotation of the input and output shaft of the transmission 3 becomes impossible, i.e. what is called an interlock state occurs, and so engagement in these is performed alternatively.

A hydraulic control circuit 7 includes a regulator valve, a solenoid valve, a hydraulic pump 8, and a hydraulic passage. The regulator valve adjusts a hydraulic pressure from the hydraulic pump 8, which is driven by the engine 1, to a line pressure. Using the line pressure as a source pressure, the solenoid valve adjusts a hydraulic pressure supplied to friction element, including the forward clutch 5 (and also to constituent elements of a continuously variable transmission mechanism in the case where the transmission 3 is a continuously variable transmission). The valves and friction element are connected to one another by the hydraulic passage.

Each valve of the hydraulic control circuit 7 is controlled based on a control signal from a transmission controller 9. The transmission controller 9 is composed of a CPU, a ROM, a RAM, an input/output interface, and the like. The transmission controller 9 determines a driving condition of the vehicle based on various types of signals input from various types of sensors and an engine controller, and outputs instructions to the hydraulic control circuit 7 so as to achieve a gear position (a speed ratio in the case where the transmission 3 is a continuously variable transmission) appropriate for the driving condition.

For example, the transmission controller 9 receives, as input, signals from rotational speed sensors 101, 102, 103, a mode detection switch 104, an accelerator pedal opening sensor 105, a brake switch 106, and the like. The rotational speed sensor 101 detects a rotational speed Ne of the engine 1. The rotational speed sensor 102 detects an input rotational speed of the transmission 3. The rotational speed sensor 103 detects an output rotational speed of the transmission 3. The mode detection switch 104 detects a mode of the transmission 3 selected by a select switch 11. The accelerator pedal opening sensor 105 detects an amount of operation on an accelerator pedal (hereinafter referred to as "accelerator pedal opening, APO"). The brake switch 106 detects ON/OFF of a brake.

The select switch 11 is lever-operated or button-operated. Operating a lever or buttons of the select switch 11 enables selection of one of the following modes as a mode of the transmission 3: a parking mode (hereinafter "P mode"), a reverse mode (hereinafter "R mode"), a neutral mode (hereinafter "N mode"), and a driving mode

(hereinafter "D mode").

The transmission controller 9 causes each of the reverse brake 4 and the forward clutch 5 to be engaged or released in accordance with a mode selected by the select switch 11. Specifically, in the D mode, the reverse brake 4 is released and the forward clutch 5 is engaged. In the R mode, the reverse brake 4 is engaged and the forward clutch 5 is released. In the P mode and the N mode, the reverse brake 4 and the forward clutch 5 are released.

A description is now given of a detailed configuration of the forward clutch 5.

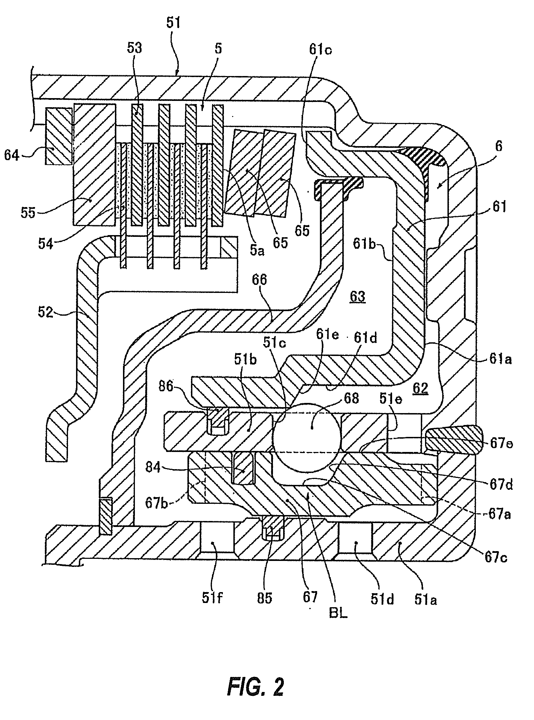

Fig. 2 is a cross-sectional view of the forward clutch 5 and a clutch operation pack 6 that causes the forward clutch 5 to operate. The configurations thereof will now be described.

The forward clutch 5 includes a clutch drum 51, a clutch hub 52, driven plates 53, drive plates 54, and a retainer plate 55.

The clutch drum 51 and the clutch hub 52 are arranged coaxially. Unillustrated rotational elements (a shaft, a gear, etc.) are joined to the clutch drum 51. Other unillustrated rotational elements (a shaft, a gear, etc.) are joined to the clutch hub 52.

The driven plates 53 are attached to the clutch drum 51 by means of a spline joint such that the driven plates 53 are slidable in an axial direction. The drive plates 54 are attached to the clutch hub 52 by means of a spline joint such that the drive plates 54 are slidable in the axial direction. Four driven plates 53 and four drive plates 54 are arranged alternately. The drive plates 54 have friction surfaces on both sides, and clutch facings are attached to the friction surfaces.

The clutch drum 51 transmits, to the clutch hub 52, the rotation input from the rotational elements joined to the clutch drum 51 via the driven plates 53 and the drive plates 54.

The retainer plate 55 is interposed between a retaining ring 64 and a drive plate 54 that is arranged at the end opposite to a hydraulic piston 61. The retaining ring 64 is fixed to a groove on the inner periphery of the clutch drum 51. The retainer plate 55 has a friction surface on one side. Furthermore, the retainer plate 55 has a larger thickness than the driven plates 53 in the axial direction, and prevents the driven plates 53 and the drive plates 54 from falling.

The clutch operation pack 6 includes the hydraulic piston 61, an ON pressure piston chamber 62, an OFF pressure piston chamber 63, the retaining ring 64, diaphragm springs 65, a partition plate 66, and the lock mechanism BL.

The hydraulic piston 61 is arranged such that it is displaceable in the axial direction relative to the forward clutch 5. The hydraulic piston 61 has an ON pressure receiving surface 61a on one side, and an OFF pressure receiving surface 61b on the other side.

The ON pressure piston chamber 62 is defined between the clutch drum 51 and the hydraulic piston 61 so as to cause the ON pressure to act on the ON pressure receiving surface 61a of the hydraulic piston 61.

The OFF pressure piston chamber 63 is defined between the partition plate 66, which is fixed to the clutch drum 51, and the hydraulic piston 61 so as to cause the OFF pressure to act on the OFF pressure receiving surface 61b of the hydraulic piston 61.

The retaining ring 64 is arranged in a position opposite to the hydraulic piston 61 with the forward clutch 5 therebetween, and supports the forward clutch 5 in the axial direction.

The diaphragm springs 65 are interposed between a clutch-side end surface 61c of the hydraulic piston 61 and a piston-side end surface 5a of the forward clutch 5. Two diaphragm springs 65 are arranged in such a manner that they are stacked in the axial direction. The diaphragm springs 65 exert an engaging force acting on the forward clutch 5 as a result of moving the hydraulic piston 61 in an engaging direction toward the retaining ring 64.

The lock mechanism BL is built in the clutch drum 51, and is composed of the hydraulic piston 61, a ball holding piston 67, and a ball 68.

The hydraulic piston 61 is arranged such that it is displaceable in the axial direction relative to the forward clutch 5. The hydraulic piston 61 has a housing part 61d and a tapered surface 61e. The housing part 61d houses the ball 68 when a movement of the hydraulic piston 61 in a releasing direction is restricted. The tapered surface 61e is formed continuously with the housing part 61d. At the time of a stroke movement of hydraulic piston 61 in the releasing direction, the tapered surface 61e pushes the ball 68 inward.

The ball holding piston 67 is arranged in a cylindrical space defined by a cylindrical inner periphery part 51a of the clutch drum 51 that covers the hydraulic piston 61 and by a cylindrical partition wall part 51b that projects from the clutch drum 51 in the axial direction. The ball holding piston 67 moves in the axial direction with the action of the ON pressure or the OFF pressure. A seal ring 84 seals between the outer peripheral surface of the ball holding piston 67 and the cylindrical partition wall part 51b. A seal ring 85 seals between the inner peripheral surface of the ball holding piston 67 and the cylindrical inner periphery part 51a. A seal ring 86 seals between the inner peripheral surface of the hydraulic piston 61 and the cylindrical partition wall part 51b. In this way, the ON pressure piston chamber 62 and the OFF pressure piston chamber 63 are defined on both sides of the hydraulic piston 61.

An ON pressure port 51d, which opens into the clutch drum 51, and the ON pressure piston chamber 62 communicate with each other via an ON pressure communication groove 67a formed in the ball holding piston 67 and via an ON pressure communication hole 51e, which is an opening through the cylindrical partition wall part 51b. An OFF pressure port 51f, which opens into the clutch drum 51, and the OFF pressure piston chamber 63 communicate with each other via an OFF pressure communication groove 67b formed in the ball holding piston 67 and via an OFF pressure communication clearance secured between an end portion of the cylindrical partition wall part 51b and the partition plate 66.

The ball holding piston 67 has a housing part 67c, a tapered surface 67d, and a lock surface 67e. The housing part 67c houses the ball 68 when a movement of the hydraulic piston 61 in the releasing direction is permitted. The tapered surface 67d and the lock surface 67e are formed continuously with the housing part 67c. At the time of a stroke movement of the ball holding piston 67 in a direction toward the forward clutch 5, the tapered surface 67d pushes the ball 68 outward, and the lock surface 67e locks the pushed ball 68 at a resultant position thereof.

The ball 68 is placed in a ball hole 51 c, which is an opening through the cylindrical partition wall part 51b. The tapered surfaces 61e, 67d of the hydraulic piston 61 and the ball holding piston 67 apply a force to the ball 68 as the pistons 61, 67 move in the axial direction with the action of the ON pressure or the OFF pressure. Accordingly, the ball 68 moves in a radial direction between a lock position and a lock deactivation position.

According to the above-described configuration, the supply of the ON pressure to the ON pressure piston chamber 62 causes the hydraulic piston 61 to move in the engaging direction toward the forward clutch 5, thereby placing the forward clutch 5 in the engaged state with a pushing force of the diaphragm springs 65 that have been pushed and compressed. Upon the movement of the hydraulic piston 61 in the engaging direction, the ball 68 moves in a direction toward an outer diameter due to a rotation-induced centrifugal force and the hydraulic pressure. Consequently, the ball 68 is housed in the housing part 61d. As the ON pressure acts on the ball holding piston 67, the ball holding piston 67 moves in the axial direction (the direction toward the forward clutch 5), and the lock surface 67e holds the ball 68 held in the housing part 67c.

As a result, the lock mechanism BL is placed in the locked state. Accordingly, a movement of the hydraulic piston 61 in the releasing direction is restricted, and the engaged state of the forward clutch 5 is maintained even if the ON pressure is drained. The ON pressure is supplied to the ON pressure piston chamber 62 only during an engagement operation. It is not necessary to supply the ON pressure to maintain the engaged state of the forward clutch 5.

The control of the transmission controller 9, where the lock mechanism BL is brought into the locked state by supplying and discharging the ON-pressure mentioned above and where thereby the forward clutch 5 is maintained in the engaged state, is called engagement processing. The transmission controller 9 performs the engagement processing when the D-mode is selected by the select switch 11.

Meanwhile, the supply of the OFF pressure to the OFF pressure piston chamber 63 causes the ball holding piston 67 to move in the axial direction (a direction away from the forward clutch 5), from the position in which the ball 68 is held by the lock surface 67e to the position in which holding of the ball 68 by the lock surface 67e is cancelled. A combination of a force of the OFF pressure and a reaction force opposing the engaging force exerted by the diaphragm springs 65 acts on the hydraulic piston 61. This results in a stroke movement of the hydraulic piston 61 in a return direction, thereby pushing the ball 68 back in a lock deactivation direction. Once the ball 68 has moved to the lock deactivation position, the lock mechanism BL is placed in the unlocked state, and the forward clutch 5 is released.

When the forward clutch 5 is released, the ON pressure is zero. This maintains a state where the ball 68 is housed in the housing part 67c of the ball holding piston 67 even if the OFF pressure is drained. The OFF pressure is supplied to the OFF pressure piston chamber 63 only during a release operation. It is not necessary to supply the OFF pressure to maintain the released state of the forward clutch 5.

The control of the transmission controller 9, where the lock mechanism BL is brought into the unlocked state by supplying and discharging the OFF-pressure mentioned above and where thereby the forward clutch is maintained in the released state, is called release processing. The transmission controller 9 performs the release processing when a mode other than the D-mode is selected by the select switch 11.

Now, the forward clutch 5 can maintain the engaged state when the lock mechanism BL is brought into the locked state with the engaged state established by the engagement processing, as mentioned above, even if the ON-pressure is not supplied to the ON-pressure piston chamber 62. However, the forward clutch 5 may slip even in the engaged state, for example, when the ball 68 is not well accommodated in the storage part 61d, or when the ball 68 is not held on the lock face 67e, or when the clutch facing of a driven plate 53 or a drive plate 54 is worn. When slip arises, it needs to be suppressed.

Accordingly, the transmission controller 9 performs slip detection/suppression control described below when the forward clutch 5 is engaged by the engagement processing.

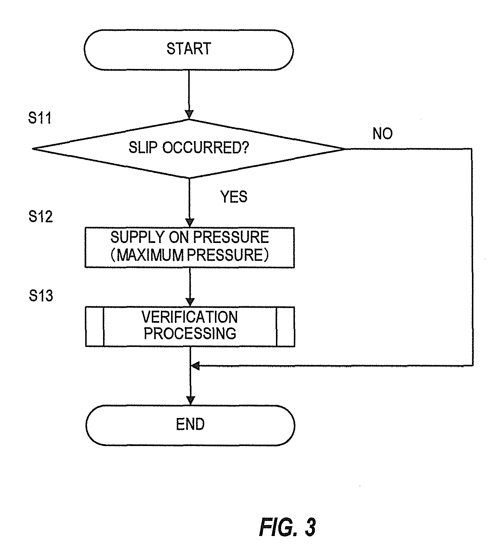

FIG. 3 is a flow chart showing the substance of slip detection/suppression processing which the transmission controller 9 performs and which is implemented while a vehicle is traveling (while the D-mode is selected).

In the slip detection/suppression processing, firstly the transmission controller 9 determines whether or not the forward clutch 5 slipped, based on the input rotational speed and the output rotational speed of the transmission 3 (S11). The slip of the forward clutch 5 can be determined based on the change of a deviation or a ratio between the input rotational speed and the output rotational speed.

When it is determined that the forward clutch 5 slipped, the processing proceeds to S12, where the transmission controller 9 supplies the ON-pressure to the ON-pressure piston chamber 62. The ON-pressure supplied at this time is the maximum pressure which can be supplied from the hydraulic control circuit 7. Thereby, the hydraulic piston 61 further compresses the diaphragm spring 65, and the engaging force of the forward clutch 5 is increased, which suppresses the slip of the forward clutch 5.

Then, the transmission controller 9 performs verification processing that verifies whether or not the slip of the forward clutch 5 is a temporary one (S13), which will be described later.

The processing is ended when it is determined that the forward clutch 5 did not slip.

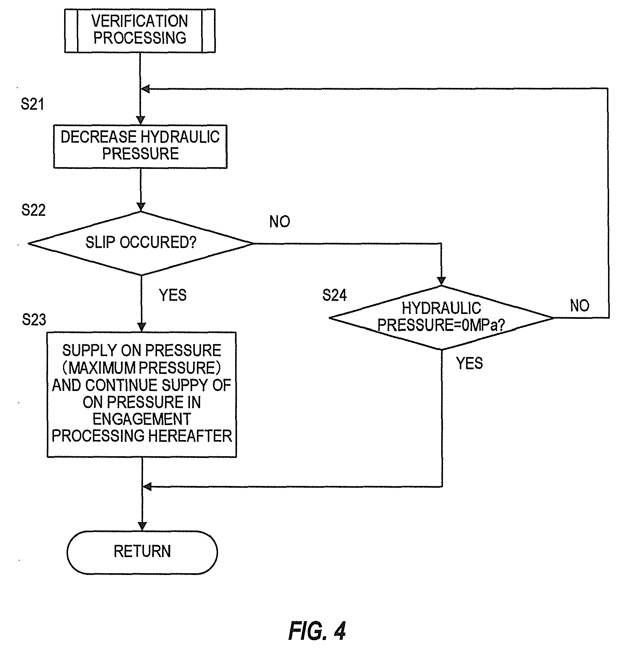

FIG. 4 is a flow chart showing the substance of the verification processing (S13 of FIG. 3).

In the verification processing, firstly the transmission controller 9 decreases the hydraulic pressure of the ON-pressure piston chamber 62 by ΔP (S21).

Next, the transmission controller 9 determines whether or not the forward clutch 5 slipped based on a decrease of hydraulic pressure of the ON-pressure piston chamber 62. The judgment is made based on the input rotational speed and the output rotational speed of the transmission 3 in a manner similar to that of the judgment of S 11.

When the forward clutch 5 slipped, the processing proceeds to S23 and the ON-pressure (the maximum pressure) is supplied again to the ON-pressure piston chamber 62, which suppresses the slip of the forward clutch 5. In the engagement processing performed hereafter, it is controlled so that the ON-pressure is continuously supplied to the ON-pressure piston chamber 62 regardless of the lock state of the lock mechanism BL.

On the other hand, when it is determined that slip does not occur in S22, the processing proceeds to S24, where the transmission controller 9 determines whether or not the hydraulic pressure of the ON-pressure piston chamber 62 has become 0 MPa. If the hydraulic pressure of the ON-pressure piston chamber 62 has not become 0 MPa, the processing returns to S21; with the hydraulic pressure of the ON-pressure piston chamber 62 further lowered (S21), it is determined again whether or not the forward clutch 5 slipped (S22).

When it is determined that the hydraulic pressure of the ON-pressure piston chamber 62 has become 0 MPa, the slip of the forward clutch 5 determined in S11 is regarded as a temporary one, and the processing is ended with the hydraulic pressure of the ON-pressure piston chamber 62 remaining lowered. After that, the processing returns to the normal engagement processing.

Therefore, according to the slip detection/suppression processing mentioned above, since the ON-pressure is supplied to the ON-pressure piston chamber 62 when the forward clutch 5 slips, even though the forward clutch 5 has been engaged by the engagement processing (S11: YES, S12), the slip of the forward clutch 5 is suppressed. Thereby, the reduction of the power performance due to the slip of the forward clutch 5 can be supressed.

Moreover, when the hydraulic pressure of the ON-pressure piston chamber 62 is gradually lowered after the ON-pressure is supplied to the ON-pressure piston chamber 62 with the forward clutch 5 slipping, and when the forward clutch 5 does not slip even if the hydraulic pressure of the ON-pressure piston chamber 62 is lowered (S21, S22: NO, S24: YES), the slip of the forward clutch 5 determined for the first time is regarded as a temporary one, and it is controlled so that the processing returns to the normal engagement processing with the hydraulic pressure of the ON-pressure piston chamber 62 remaining lowered. Thereby, there can be prevented the deterioration of fuel efficiency which is caused by continuously supplying the ON-pressure.

On the other hand, when the forward clutch 5 slips due to the hydraulic pressure of the ON-pressure piston chamber 62 being lowered (S21, S22: YES), since it cannot be said that the slip of the forward clutch 5 determines for the first time is a temporary one, it is controlled so that the ON-pressure is continuously supplied to the ON-pressure piston chamber 62 in the engagement processing hereafter, regardless of the lock state of the lock mechanism BL (S23). Thereby, the reoccurrence of the slip of the forward clutch 5 can be prevented.

This concludes the description of the embodiment of the present invention. It should be noted that the above-described embodiment merely represents a part of application examples of the present invention, and is not intended to limit a technical scope of the present invention to specific configurations of the above-described embodiment.

For example, in the above-described embodiment, the supply of the hydraulic pressure to the ON pressure piston chamber 62 is stopped after the lock mechanism BL is placed in the locked state. However, it is possible to adopt a configuration in which the hydraulic pressure in the ON pressure piston chamber 62 is lowered without stopping the supply. Similarly, in the above-described embodiment, the supply of the hydraulic pressure to the OFF pressure piston chamber 63 is stopped after the lock mechanism BL is placed in the unlocked state. However, it is possible to adopt a configuration in which the hydraulic pressure in the OFF pressure piston chamber 63 is lowered without stopping the supply.

Furthermore, for example, the specific configuration of the forward clutch 5 shown in Fig. 2 is an example of a friction element having a lock mechanism attached thereto. The present invention is also applicable to a friction element having a lock mechanism attached thereto and having a configuration other than this specific configuration.

Moreover, the reverse brake 4 may be constituted by friction element with a lock mechanism in a manner similar to the forward clutch 5 so that the slip detection/control processing mentioned above may be performed for the reverse brake 4.

This application claims for priority based on Japanese Patent Application NO. 2012-212177 filed on Sept. 26, 2012, the entire substance of which is herein incorporated by reference.

## Claims

1. An automatic transmission comprising:
a friction element which is arranged in a power transmission path and in which a lock mechanism is brought into a locked state when an ON-pressure is supplied to an engagement-side oil chamber and in which an engaged state is maintained even if a hydraulic pressure of the engagement-side oil chamber is lowered when the lock mechanism has been brought into the locked state; and
a control device, which performs engagement processing where the friction element is engaged and the lock mechanism is brought into the locked state by supplying the ON-pressure to the engagement-side oil chamber and where the hydraulic pressure of the engagement-side oil chamber is lowered, and which supplies the ON-pressure to the engagement-side oil chamber when the friction element slips even though the friction element has been engaged in the engagement processing, while a vehicle is traveling.

2. The automatic transmission according to claim 1, wherein
the control device controls such that the hydraulic pressure of the engagement-side oil chamber is lowered after the ON-pressure is supplied to the friction element with the friction element slipping and such that the hydraulic pressure of the engagement-side oil chamber remains lowered when the friction element does not slip even if the hydraulic pressure of the engagement-side oil chamber is lowered.

3. The automatic transmission according to claim 2, wherein
the control device controls such that the ON-pressure is supplied again to the engagement-side oil chamber when the friction element slips again with the hydraulic pressure of the engagement-side oil chamber lowered and such that the ON-pressure is continuously supplied to the engagement-side oil chamber in the engagement processing hereafter.

4. A method for controlling an automatic transmission, the automatic transmission having a friction element which is arranged in a power transmission path and in which a lock mechanism is brought into a locked state when an ON-pressure is supplied to an engagement-side oil chamber and in which an engaged state is maintained even if a hydraulic pressure of the engagement-side oil chamber is lowered when the lock mechanism has been brought into the locked state, the method comprising:
performing engagement processing where the friction element is engaged and the lock mechanism is brought into the locked state by supplying the ON-pressure to the engagement-side oil chamber and where the hydraulic pressure of the engagement-side oil chamber is lowered; and
supplying the ON-pressure to the engagement-side oil chamber when the friction element slips even though the friction element has been engaged in the engagement processing, while a vehicle is traveling.
